# EUROPEAN PATENT SPECIFICATION

(11) **EP 1 310 729 B1**
(45) Date of publication and mention of the grant of the patent: **04.08.2004**
(21) Application number: 02023475.3
(22) Date of filing: 21.10.2002
(51) Int. Cl.: F17C 1/16, F17C 1/06, B29C 53/60

(54) **A process for making a container for pressurized fluids, and corresponding container**
Verfahren zum Herstellen eines Behälters für Druckfluide, und entsprechender Behälter
Procedé de construction d'un reservoir pour fluides sous pression, et reservoir correspondant

(30) Priority: 07.11.2001 IT TO20011058
(43) Date of publication of application: 14.05.2003
(73) Proprietor: C.R.F. Società Consortile per Azioni, 10043 Orbassano (Torino) (IT)
(72) Inventor: Veca, Antonio, 10020 Casalborgone (Torino) (IT); Alacqua, Stefano, 10090 Rivoli, Cascine Vica (Torino) (IT); Butera, Francesco, 10100 Torino (IT)
(74) Representative: Notaro, Giancarlo

(56) References cited:
- US-A- 3 508 677
- US-A- 3 851 786
- US-A- 5 227 208

## Description

The present invention relates to a process for making a container for pressurized fluids, of the type referred to in the preamble of Claim 1, and to a container for pressurized fluids manufactured in accordance with such a process.

Walls formed by a plurality of layers of material notoriously have mechanical characteristics and characteristics of permeability which are better than those that can be obtained from the use of a single layer. In the specific case of containers for pressurized fluids, the provision of multilayer walls enables optimal barrier properties to be obtained, not only in regard to pure fluids or classes of fluids, but also in regard to mixtures the components of which are totally different from one another.

In this perspective, from FR-A-2.733.296 there is known a tank for pressurized gas, the main body of which is made of a multilayer thermoplastic material. On the outside of the longitudinal ends of the body referred to above there are then fixed, via an adhesive, annular elements in order to enable fixing of a stiffening bar inside the tank, as well as to contain any outward expansion of the tank, due to the expansion of the gas contained therein.

Document US-A-5,277,208 also discloses a method of joining a tubular composite structure to another structure, which comprises providing a tube or solid structure of sufficient tensile and shear strength with an appropriate number of circumferential grooves cut into the outer surface, and threaded or otherwise adapted for attachment at the end with an interfacing structure. The joint tube or solid so prepared is next placed on or abutted against a conventional mandrel and held in place by friction or in some other way so as to permit its being integrated into a filament wound structure. When the filament winding phase of fabrication is completed, the assembly is placed in a conventional oven and allowed to cure. After conventional composite curing, the assembly is separated from the mandrel. Joining of the filament wound structure and the integrally wound joint cylinder (or other shaped joint structure) to another structure may be achieved by threaded connection or other conventional joining mechanism.

An example of filament winding technique is described in US-A-3,851,786.

With respect to the said known technique, the purpose of the present invention is to provide a new and advantageous process for making multilayer-wall containers for pressurized fluids.

In the above general context, a first purpose of the invention is to provide a process that will enable production in a simple and inexpensive way of containers of the type referred to.

Another purpose of the invention is to provide a process that will enable production of containers of the type referred to, which, albeit extremely light, are characterized by structural sturdiness and excellent barrier properties.

Another purpose of the invention is to provide a mode of production of containers of the type referred to which will enable convenient recycling of the materials employed, whenever so required.

The above and yet other purposes, which will emerge more clearly from what follows, are achieved according to the present invention by a process for making a container for pressurized fluids, as well as by a container for pressurized fluids, having the characteristics specified in the attached claims 1 and 12, which are understood as forming an integral part of the present description.

Further purposes, characteristics and advantages of the present invention will emerge clearly from the ensuing detailed description and from the annexed drawings, which are provided purely by way of explanatory and non-limiting example and in which:
- Figure 1 represents a three-dimensional cutaway view of a generic container for pressurized fluids, made according to the present invention;
- Figure 2 represents a detail at an enlarged scale of Figure 1;
- Figure 3 represents a longitudinal section of the inlet area of the container of Figure 1;
- Figure 4 represents a cross section according to the line IV- IV of Figure 3.

In the above figures, the reference number 1 designates as a whole a container for pressurized fluids, produced according to the teachings of the present invention.

The container 1 comprises a main body 2, made of a single piece, so as to define an internal chamber 3 for containing the fluid.

As may be noted, the body 2 is shaped so as to define a longitudinal mouth, inside which there is inserted a terminal element or bushing, of a substantially cylindrical shape, designated by 4.

The reference numbers 5 and 6 designate two outer clamping rings, which are fitted on the mouth of the body 2, at the area of housing of the bushing 4.

The wall that forms the main body 2 is of the multilayer type, i.e., formed by a plurality of layers set on top of one another, made of plastic or synthetic material, whether a thermoplastic material or a thermosetting material, selected for example between polyamides, polypropylenes, polyethylenes, polyesters, polyurethanes, polyolefins, polyacrylates, polymethacrylates, and epoxy or elastomeric resins. The materials referred to above may conveniently be nanocomposites, meaning thereby the possibility for there to be added to them fillers of nanometric dimensions. According to the invention, the body 2 may, for this purpose, be obtained via a process of hot moulding or of blown co-extrusion.

In the case provided by way of example, the bushing 4 is provided for producing a sort of pipe union or pipe fitting and has for this purpose a through hole that is provided with an internal thread 4A so as to enable insertion and fixing thereto of a known check valve.

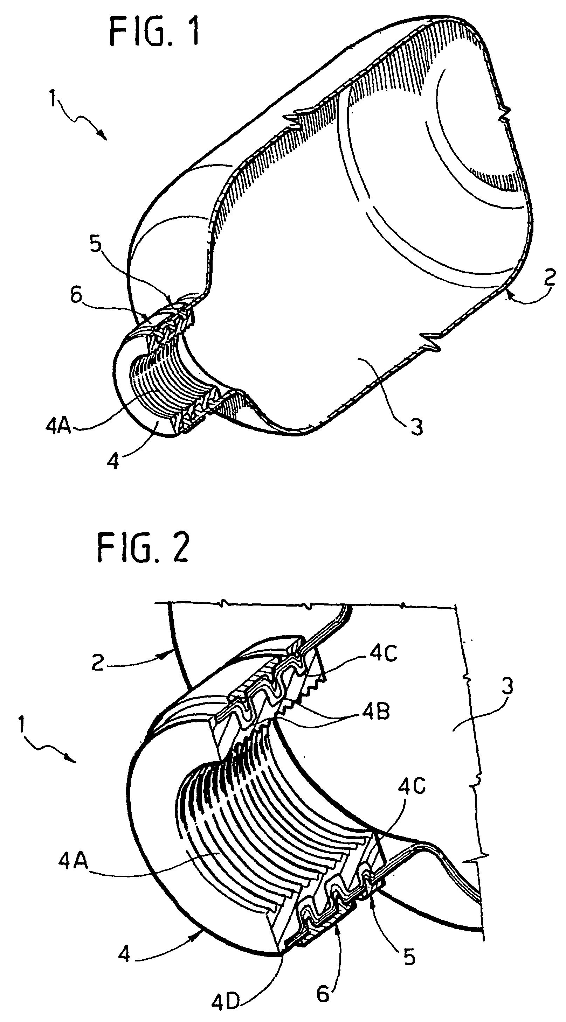

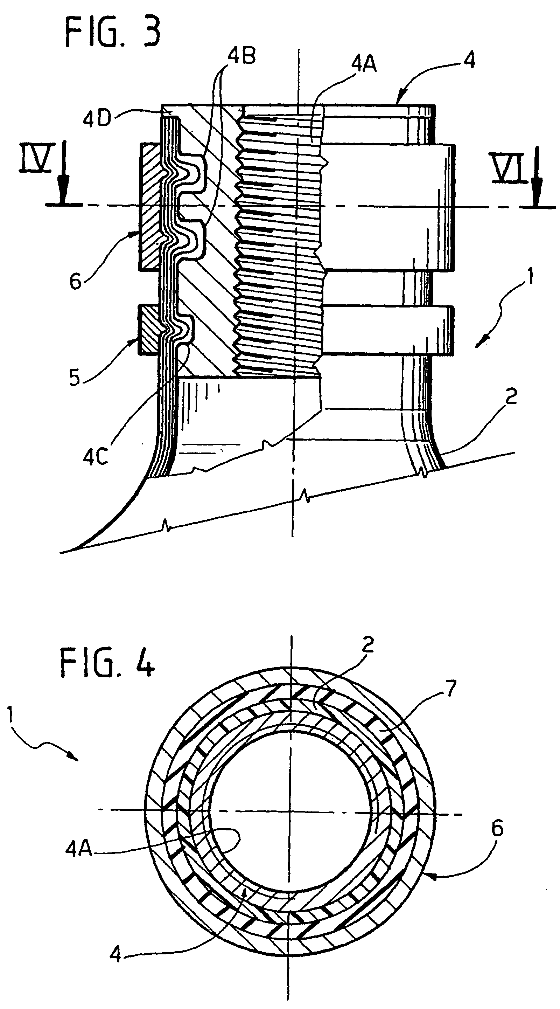

As may be noted, particularly in Figures 2 and 3, on the outer surface of the bushing 4 there are likewise defined grooves or channels, and in particular two first grooves 4B and a second groove 4C. The bushing 4 likewise has an end flange, designated by 4D, aimed at constituting an end-of-travel for insertion of the bushing itself within the mouth of the body 2.

The bushing 4 may be made using any material that is sufficiently rigid for the purpose for which it is designed, such as for example a metal or ceramic or synthetic material.

According to an important aspect of the present invention, the rings 5 and 6 are made of shape-memory alloy (SMA); for this purpose one of the following alloys may be used: Ni-Ti, Ni-Ti-Cu, Cu-Al-Zn, Cu-Al-Ni.

Shape-memory alloys (SMAs) are in themselves well known and do not, as such, call for a detailed description herein; it is sufficient to recall that such alloys make it possible to obtain objects that can undergo variation of shape and dimensions as a result of external stimuli (electrical, thermal or magnetic ones) and/or via the application of external loads.

As may be noted in Figure 3, on the inner surface of the ring 6 there are defined two projections, which are designed to operate on the grooves 4B, so as to bring about a certain deformation of the multilayer wall of the body 2, towards the inside of the said grooves 4B. A similar projection is defined on the inner surface of the ring 5, aimed at bringing about deformation of the multilayer wall in the direction of the respective groove 4C of the bushing 4.

As will emerge clearly from what follows, for the purposes of fabrication of the container 1, the bushing 4 is inserted in the mouth of the body 2, and the seal between the two parts is then guaranteed directly by the above-mentioned action of the rings 5 and 6, which provide a radial tightening of the wall of the body 2 on the bushing.

Between the rings 5 and 6 and the multilayer wall of the body 2 there may possibly be set at least one cylindrical gasket. Such a gasket is indicated by way of example with the number 7 in Figure 4. It is to be pointed out how the gasket 7 may possibly be provided not so much for guaranteeing a better seal against leakage of the fluid contained in the chamber 3 as for protecting the wall of the body 2 from micro-damage, such micro-damage possibly deriving from the direct contact between the rings 5 and 6 and the wall 2. In other words, then, the gasket 7 has the purpose of preventing the formation of micro-fractures in the multilayer wall from possibly leading to the onset of cracks, which might in turn bring about the subsequent failure of the container 1.

The wall that forms the body 2 may be made up of a plurality of layers of different materials. For this purpose, for example, in the perspective of a hot moulding of the body 2, there may be advantageously used a sheet obtained from the superimposition of:
- a first film made of nanocomposite polyamide, which has the job of functioning as barrier against the gases enclosed within the container 1 and of providing at the same time a major structural contribution;
- a second film made of another low-permeability polymeric material, so as to enable the container 1 to be used for containing a given gaseous component. In this perspective, for example, a film made of polyethylene may be employed in the case where the container 1 is to contain alcoholated fuels. It is to be noted therefore that the characteristic of the second film does not lie so much in the material that makes it up as in the function that it performs;
- a third elastomeric film made of polyurethane, polyester or polyolefin, set between the two films referred to above, which has the job of increasing the mechanical characteristics of the container 1, so guaranteeing a greater resistance to impact. The purpose of the third film is likewise that of functioning as a bearing between the layers adjacent to it, so favouring slight sliding thereof so as to increase the elasticity and the resilience, i.e., the impact resistance of the container 1.

Between the aforesaid films there may possibly be provided also layers of adhesive. The presence of adhesive must in any case be considered optional, should the friction between the aforesaid films due to the pressure inside the container 1 not be considered sufficient for the purpose.

In general terms, the various films provided may have different thicknesses from one another according to the material and the role performed. Any single layer or film provided will preferably have a thickness of between 10 and 100 µm, so that the superimposition of a number of layers on top of one another will lead to obtaining a sheet, and hence a wall of the body 2, of a total thickness of between 50 µm and 5 mm. Purely by way of example, the first film, the second film, the third film, and the layer of adhesive that are referred to above may have thicknesses of up to 30, 30, 20 and 10 µm, respectively. It is to be moreover noted that the sequence indicated may also be repeated for a discrete number of times until the desired thickness and resistance for the wall of the body 2 is obtained, which will depend upon the pressure of use of the container 1.

For the purposes of fabrication of the container 1, the body 1 is formed using a known process, such as, for example, hot moulding or blown co-extrusion.

Next, in the mouth of the body 2 there is inserted the bushing 4 after prior heating of the latter in order to guarantee a perfect adhesion between the parts. The bushing 4 is inserted until its flange portion 4D bears upon the end of the mouth.

In the case where the cylindrical gasket 7 is envisaged, this will subsequently be fitted on the mouth of the body.

The rings 5 and 6 are then fitted in succession on the mouth of the body 2. For this purpose, the rings 5 and 6 are deformed below the temperature of martensite-to-austenite transition. The said rings 5 and 6 are then heated until the aforesaid transition temperature is exceeded, so that they can be fitted on the mouth of the body 2 in such a way that the respective surface projections are aligned with the groove 4C and the grooves 4B, respectively. The rings 5 and 6 subsequently resume their original shape, tightening in the direction of the bushing 4, thus causing deformation of the multilayer wall towards the inside of the aforesaid grooves 4B and 4C, as may be seen in Figure 4.

Containers made according to the invention may find application in various sectors, such as in the production of tanks for gaseous fuels for vehicles, containers for sprays, more or less large-sized cylinders, for example for sport or leisure activities (cylinders for oxygen, cylinders for camping, etc.). The dimensions of the containers according to the invention may then vary according to the application chosen.

From the foregoing description there clearly emerge the characteristics of the process for making containers for pressurized fluids and of the container for pressurized fluids according to the present invention, which are specified in greater detail in the attached claims.

From the foregoing description there likewise clearly emerge the advantages of the invention, principally represented by the simplicity of implementation of the process described, by the possibility of obtaining containers having excellent characteristics of impermeability to a high number of pure compounds and mixtures, by the possibility of obtaining containers having high mechanical performance, and by the possibility of ease of separation of the various parts of the container in view of the possible recycling of the materials that make it up.

It is clear that, for the person skilled in the branch, numerous variations to the process and to the container described purely by way of example are possible, without thereby departing from the sphere of novelty inherent in the inventive idea.

For example the number of rings 5 and 6 and/or the number of grooves 4B-4C defined on the bushing 4 could vary with respect to the ones illustrated and described by way of example.

Containers made according to the invention may be provided with one or more outer layers of surface coating in order to improve the characteristics of permeability, as well as to provide an adequate mechanical protection and protection from abrasion. The materials used for this purpose may be thermosetting plastics (either elastomers or not).

Likewise pointed out is the possibility of envisaging also a fire-resistant layer for the fabrication of the body 2 in order to guarantee flame-proof protection of the container according to the invention.

## Claims

1. A process for making a container for pressurized fluids (1), which envisages
- obtaining a body (2) defining both at least one part of a chamber (3) for containing the fluid and a mouth of said chamber (3), said body (2) being formed by a wall made of plastic or synthetic material (2) comprising a plurality of adjacent layers,
- obtaining a terminal element (4) of a substantially cylindrical shape, on the outer surface of which at least depression (4B, 4C) is defined;
**characterized in that** it envisages the following steps:
a) the insertion of said terminal element (4) inside said mouth, after said wall has been formed;
b) the stressing of at least one annular element made of shape-memory alloy (5, 6), so as to induce a deformation of the latter such as to enable its fitting on said mouth, until it reaches a position that is aligned with respect to said depression (4B, 4C); and
c) the subsequent local deformation of said wall at said mouth, obtained by determining restoration of the original shape of said annular element (5, 6), the latter tightening radially said wall to deform it towards the inside of said depression (4B, 4C).

2. The process according to Claim 1, in which said wall is formed by the superimposition of a plurality of films.

3. The process according to Claim 1, which envisages the prior formation of one or more projections on the inner surface of said annular element (5, 6).

4. The process according to Claim 1 or Claim 3, which envisages the prior formation of a plurality of depressions (4B, 4C) on the outer surface of said terminal element (4).

5. The process according to Claim 4, which envisages fitting on said mouth at least two annular elements made of shape-memory alloy (5, 6) in accordance with step c) until each of them reaches a position aligned with at least one respective depression (4B, 4C).

6. The process according to Claim 4, in which said annular element (6) brings about the deformation of said wall towards the inside of at least two of said depressions (4C).

7. The process according to Claim 1, in which between said annular element (5, 6) and said wall (2) there is inserted at least one gasket (7).

8. The process according to Claim 1, in which said wall comprises at least:
- a first layer made of nanocomposite polyamide;
- a second layer made of low-permeability polymeric material; and
- a third layer made of elastomeric material, in particular set between said first and second layers; between said first, second and third layers there possibly being set an adhesive material.

9. The process according to one or more of the preceding claims, in which said terminal element (4) is heated before insertion in said mouth.

10. The process according to one or more of the preceding claims, which envisages the laying of at least one layer of outer surface coating on said wall (2).

11. The process according to one or more of the preceding claims, in which said body (2) is obtained by means of hot moulding or blown co-extrusion.

12. A container for pressurized fluids (1) manufactured in accordance with one or more of claims 1 to 11, which comprises a body (2) defining both at least one part of a chamber (3) for containing the fluid and a mouth of said chamber (3), said body (2) being formed by a wall made of plastic or synthetic material (2), which comprises a plurality of adjacent layers, wherein:
- inside said mouth there is inserted at least one terminal element (4) of a substantially cylindrical shape, on the outer surface of which there is defined at least one depression (4B, 4C); and
- on the outside of said mouth there is fitted at least one annular element made of shape-memory alloy (5, 6) in a position aligned with respect to said depression (4B, 4C) ;
in which said wall is locally deformed at said mouth, towards the inside of said depression (4B, 4C), via an action of radial tightening produced by said annular element (5, 6).

13. The container according to Claim 12, in which said annular element (5, 6) has one or more projections on its own inner surface.

14. The container according to Claim 12, in which on the outer surface of said terminal element (4) there is provided a plurality of depressions (4B, 4C).

15. The container according to Claim 14, in which on said mouth there are fitted at least two annular elements made of shape-memory alloy (5, 6), each in a position aligned with at least one respective depression (4B, 4C).

16. The container according to Claim 12, in which between said annular element (5, 6) and said wall (2) there is set at least one gasket (7).

17. The container according to Claim 12, in which said wall comprises at least:
- a first layer (12) made of nanocomposite polyamide;
- a second layer (13) made of polyethylene or similar low-permeability polymeric material; and
- a third layer (14) made of elastomeric material, such as polyurethane, polyester or polyolefin, in particular set between said first and second layers;
between two or more of said layers (12, 13, 14) there possibly being set an adhesive material (15).

## Patentansprüche

1. Verfahren zur Herstellung eines Containers für unter Druck stehende Fluide (1), welches vorsieht
- Erhalten eines Körpers (2), welcher sowohl mindestens einen Teil einer Kammer (3) zum Enthalten des Fluids und eine Mündung dieser Kammer (3) definiert, wobei der Körper (2) durch eine aus Plastik oder synthetischem Material bestehende Wand gebildet wird, welche eine Vielzahl von Schichten umfasst,
- Erhalten eines Endelements (4) von im Wesentlichen zylindrischer Form, auf dessen äußerer Oberfläche mindestens eine Vertiefung (4B, 4C) definiert ist;
**dadurch gekennzeichnet, dass** es folgenden Schritte vorsieht:
a) die Einfügung des Endelements (4) in die Mündung, nachdem die Wand gebildet wurde;
b) die Dehnung von mindestens einem ringförmigen Element aus einer Formgedächtnislegierung (5, 6), um eine Deformierung des letzteren hervorzurufen, um seine Anpassung auf der Mündung zu ermöglichen, bis es eine Position erreicht, die abgestimmt ist im Verhältnis zu der Vertiefung (4B, 4C); und
c) die folgende lokale Deformation der Wand bei der Mündung, Erhalten durch Bestimmen der Wiederherstellung der ursprünglichen Form des Ringelements (5, 6), wobei letzteres die Wand radial verengt, um sie zur Innenseite der Vertiefung (4B, 4C) hin zu deformieren.

2. Verfahren gemäß Anspruch 1, in welchem die Wand gebildet wird durch Überlagerung einer Vielzahl von Folien.

3. Verfahren gemäß Anspruch 1, welches die vorherige Bildung von einem oder mehrerer Vorsprünge auf der inneren Oberfläche des ringförmigen Elements (5, 6) vorsieht.

4. Verfahren gemäß Anspruch 1 oder Anspruch 3, welches die vorhergehende Bildung einer Vielzahl von Vertiefungen (4B, 4C) auf der äußeren 0-berfläche des Endelements (4) vorsieht.

5. Verfahren gemäß Anspruch 4, welches die Anpassung von mindestens zwei ringförmigen Elementen aus einer Formgedächtnislegierung (5, 6) auf der Mündung in Übereinstimmung mit Schritt c) vorsieht, bis jeder von ihnen eine mit mindestens einer jeweiligen Vertiefung (4B, 4C) abgestimmte Position erreicht.

6. Verfahren gemäß Anspruch 4, in welchem das ringförmige Element (6) die Deformation der Wand zur Innenseite von mindestens zwei der Vertiefungen (4C) herbeiführt.

7. Verfahren gemäß Anspruch 1, in welchem zwischen dem ringförmigen Element (5, 6) und der Wand (2) mindestens eine Dichtung (7) eingefügt ist.

8. Verfahren gemäß Anspruch 1, in welchem die Wand mindestens umfasst:
- eine erste Schicht aus Nanokomposit-Polyamid;
- eine zweite Schicht aus polymerischem Material mit niedriger Durchlässigkeit; und
- einer dritten Schicht aus einem elastomerischen Material, insbesondere zwischen der ersten und der zweiten Schicht angeordnet;
wobei zwischen den ersten, zweiten und dritten Schichten möglicherweise ein adhesives Material angeordnet ist.

9. Verfahren gemäß einem oder mehreren der vorhergehenden Ansprüche, bei welchem das Endelement (4) vor Einführung in die Mündung erhitzt wird.

10. Verfahren gemäß einem oder mehreren der vorhergehenden Ansprüche, welches die Beschichtung der Wand (2) mit mindestens einer Schicht einer Außenseitenbeschichtung vorsieht.

11. Verfahren gemäß einem oder mehreren der vorhergehenden Ansprüche, in welchem der Körper (2) erhalten wird durch Heissformen oder durch geblasene Koextrusion.

12. Behälter für unter Druck stehende Fluide (1), hergestellt in Übereinstimmung mit einem oder mehreren der Claims 1 bis 11, welcher einen Körper (2) aufweist, der sowohl mindestens einen Teil einer Kammer (3) zum Enthalten des Fluids als auch eine Mündung der Kammer (3) bildet, wobei der Körper (2) durch eine Wand aus plastischem oder synthetischem Material (2) gebildet wird, welches eine Vielzahl von angrenzenden Schichten aufweist, worin:
- in diese Mündung mindestens ein Endelement (4) von im Wesentlichen zylindrischer Form eingefügt ist, auf dessen äußerer Oberfläche mindestens eine Vertiefung (4B, 4C) definiert ist; und
- an der Außenseite der Mündung mindestens ein ringförmiges Element aus einer Formgedächtnislegierung (5, 6) angepasst ist in einer im Verhältnis zur Vertiefung (4B, 4C) abgestimmten Position;
in welchem die Wand an der Mündung lokal deformiert ist, zur Innenseite der Vertiefung (4B, 4C) hin, mittels einer Einwirkung des radialen Verengens, welche durch das ringförmige Element (5, 6) produziert wird.

13. Behälter gemäß Anspruch 12, in welchem das ringförmige Element (5, 6) einen oder mehrere Vorsprünge auf seiner inneren Oberfläche besitzt.

14. Behälter gemäß Anspruch 12, in welchem auf der Außenseite des Endelements (4) eine Vielzahl von Vertiefungen (4B, 4C) vorgesehen ist.

15. Behälter gemäß Anspruch 14, in welchem auf die Mündung mindestens zwei ringförmige Elemente aus einer Formgedächtnislegierung (5, 6) angepasst sind, jedes in einer im Verhältnis zu mindestens einer jeweiligen Vertiefung (4B, 4C) abgestimmten Position.

16. Behälter gemäß Anspruch 12, in welchem zwischen dem ringförmigen Element (5, 6) und der Wand (2) mindestens eine Dichtung (7) eingesetzt ist.

17. Behälter gemäß Anspruch 12, in welchem die Wand mindestens umfasst:
- eine erste Schicht (12) aus Nanokomposit-Polyamid;
- einer zweiten Schicht (13) aus Polyethylen oder ähnlichem polymerischem Material von niedriger Durchlässigkeit; und
- einer dritten Schicht (14) aus elastomerischem Material, so wie Polyurethan, Polyester oder Polyolefin, insbesondere angebracht zwischen den ersten und zweiten Schichten;
wobei zwischen zwei oder mehr der genannten Schichten (12, 13, 14) möglicherweise ein adhesives Material (15) angebracht ist.

## Revendications

1. Procédé de fabrication d'une bouteille destinée à des fluides sous pression (1), qui comprend
- l'obtention d'un corps (2) définissant à la fois au moins une partie d'une chambre (3) destinée à contenir le fluide et une embouchure de ladite chambre (3), ledit corps (2) étant constitué d'une paroi en plastique ou en matériau de synthèse (2) comprenant une pluralité de couches adjacentes,
- l'obtention d'un élément terminal (4) de forme pratiquement cylindrique, à la surface externe duquel est définie au moins une partie creuse (4B, 4C);
**caractérisé en ce qu'**il comprend les étapes suivantes :
a) l'introduction dudit élément terminal (4) dans ladite embouchure, une fois qu'on a fabriqué ladite paroi ;
b) la contrainte d'au moins un élément annulaire à base d'alliage à mémoire de forme (5, 6), afin de provoquer une déformation de ce dernier, de façon à permettre sa fixation au niveau de ladite embouchure, jusqu'à ce qu'il atteigne une position alignée par rapport à ladite partie creuse (4B, 4C) ; et
c) la déformation locale consécutive de ladite paroi au niveau de ladite embouchure, obtenue par détermination de la restauration de la forme d'origine dudit élément annulaire (5, 6), ce dernier resserrant radialement ladite paroi pour la déformer vers l'intérieur de ladite partie creuse (4B, 4C).

2. Procédé selon la revendication 1, dans lequel ladite paroi est formée de la superposition d'une pluralité de films.

3. Procédé selon la revendication 1 qui comprend la formation préalable d'une ou de plusieurs saillies au niveau de la surface interne dudit élément annulaire (5, 6).

4. Procédé selon la revendication 1 ou selon la revendication 3 qui comprend la formation préalable d'une pluralité de parties creuses (4B, 4C) au niveau de la surface externe dudit élément terminal (4).

5. Procédé selon la revendication 4 qui comprend la fixation sur ladite embouchure d'au moins deux éléments annulaires à base d'alliage à mémoire de forme (5, 6) selon l'étape c), jusqu'à ce que l'un d'entre eux atteigne une position alignée avec au moins une partie creuse respective (4B, 4C).

6. Procédé selon la revendication 4 dans lequel ledit élément annulaire (6) entraîne la déformation de ladite paroi vers l'intérieur d'au moins deux desdites parties creuses (4C).

7. Procédé selon la revendication 1, dans lequel au moins un joint d'étanchéité (7) est inséré entre ledit élément annulaire (5, 6) et ladite paroi (2).

8. Procédé selon la revendication 1 dans lequel ladite paroi comprend au moins :
- une première couche constituée de polyamide nanocomposite ;
- une deuxième couche constituée de matière polymère de faible perméabilité ; et
- une troisième couche constituée de matière élastomère, située en particulier entre lesdites première et deuxième couches ;
une matière adhésive se trouvant éventuellement entre lesdites première, deuxième et troisième couches.

9. Procédé selon une ou selon plusieurs des revendications précédentes, dans lequel ledit élément terminal (4) est chauffé avant introduction dans ladite embouchure.

10. Procédé selon une ou selon plusieurs des revendications précédentes, qui comprend le dépôt d'au moins une couche de revêtement de surface externe sur ladite paroi (2).

11. Procédé selon une ou selon plusieurs des revendications précédentes, dans lequel on obtient ledit corps (2) au moyen d'un moulage à chaud ou d'une co-extrusion - soufflage.

12. Bouteille destinée à des fluides sous pression (1) fabriquée selon une ou selon plusieurs des revendications 1 à 11, qui comprend un corps (2) définissant à la fois au moins une partie d'une chambre (3) destinée à contenir le fluide et une embouchure de ladite chambre (3), ledit corps (2) étant constitué d'une paroi en matière plastique ou en matériau de synthèse (2) comprenant une pluralité de couches adjacentes, dans laquelle :
- on introduit dans ladite embouchure au moins un élément terminal (4) de forme pratiquement cylindrique, à la surface externe duquel on définit au moins une partie creuse (4B, 4C) ; et
- on fixe à l'extérieur de ladite embouchure au moins un élément annulaire à base d'alliage à mémoire de forme (5, 6) dans une position alignée par rapport à ladite partie creuse (4B, 4C) ;
dans laquelle ladite paroi est déformée localement au niveau de ladite embouchure, vers l'intérieur de ladite partie creuse (4B, 4C), par l'intermédiaire d'une action de serrage radial produite par ledit élément annulaire (5, 6).

13. Bouteille conforme à la revendication 12, dans laquelle ledit élément annulaire (5, 6) comporte une ou plusieurs saillies situées sur sa propre surface intérieure.

14. Bouteille conforme à la revendication 12, dans laquelle on trouve une pluralité de parties creuses (4B, 4C).

15. Bouteille conforme à la revendication 14, dans laquelle au moins deux éléments annulaires à base d'alliage à mémoire de forme (5, 6) sont fixés au niveau de ladite embouchure, chacun se trouvant dans une position alignée avec au moins une partie creuse respective (4B, 4C).

16. Bouteille conforme à la revendication 12, dans laquelle on place au moins un joint d'étanchéité (7) entre ledit élément annulaire (5, 6) et ladite paroi (2).

17. Bouteille conforme à la revendication 12, dans laquelle ladite paroi comprend au moins :
- une première couche (12) de polyamide nanocomposite ;
- une deuxième couche (13) constituée de polyéthylène ou d'une matière polymère similaire de faible perméabilité ; et
- une troisième couche (14) constituée de matière élastomère, telle que du polyuréthane, du polyester ou de la polyoléfine, située en particulier entre lesdites première et deuxième couches ;
une matière adhésive (15) se trouvant éventuellement entre deux ou entre plus de deux desdites couches (12, 13, 14).
